# EUROPEAN PATENT SPECIFICATION

(11) **EP 1 673 542 B1**
(45) Date of publication and mention of the grant of the patent: **16.06.2010**
(21) Application number: 04774995.7
(22) Date of filing: 05.10.2004
(51) Int. Cl.: F16B 7/18, F16B 2/18

(54) **DEVICE AND METHOD FOR INTERCONNECTION OF BOX-PROFILED ELEMENTS, AND ASSEMBLY**
VORRICHTUNG UND VERFAHREN ZUM MITEINANDERVERBINDEN VON KASTENPROFILELEMENTEN UND ANORDNUNG
DISPOSITIF ET PROCEDE D'INTERCONNEXION D'ELEMENTS A PROFIL PARALLELEPIPEDIQUE ET ASSEMBLAGE

(30) Priority: 06.10.2003 NL 1024455
(43) Date of publication of application: 28.06.2006
(73) Proprietor: Zweers, Michiel, 2801 TE Gouda (NL)
(72) Inventor: Zweers, Michiel, 2801 TE Gouda (NL)
(74) Representative: Van den Heuvel, Henricus Theodorus
(86) International application number: PCT/NL2004/000698
(87) International publication number: WO 2005/033527

(56) References cited:
- WO-A1-80/02587
- GB-A- 1 563 433

## Description

The invention relates to an assembly of multiple box-profile elements and a device for interconnection of said box-profile elements, comprising: an at least substantially rigid first connection element provided with multiple first receptors for parts of said multiple box-profile elements, an at least substantially rigid second connection element adapted for cooperation with the first connection element, said second connection element being provided with multiple second receptors corresponding to the first receptors, for parts of said multiple box-profile elements, and securing means coupled with the first connection element and the second connection element to secure the mutual connection of the first connection element and the second connection element, the securing means comprising at least one locking pin that is, at least partially enclosed by both connection elements, said locking pin being adapted for engagement on a side of the first connection element opposite to the second connection element and on a side of the second connection element opposite to the first connection element, the device being adapted for clamping said multiple box-profile elements into the receptors of said device. The invention also relates to a device for the interconnection of box-profile elements for use in the assembly according to this invention. The invention further relates to a method for interconnection of box-profile elements.

The German patent publication DE 2903119 discloses a joint connection for releasably mutual coupling of pipes that cross one another. The joint connection that is currently in use comprises a lower connection element with multiple receptors for pipe sections, and an upper connection element adapted for cooperation with said lower connection element, said upper connection element being provided with multiple receptors for pipe sections. The joint also comprises a yoke plate positioned on the upper connection element that is arranged to work together with projecting claws on the lower connection element when the pipes are clamped into the joint connection. To this end, the yoke plate is provided with a central stud that can displaced relatively to the yoke towards the upper connection element in order to strengthen the clamping of the pipes by the joint connection. The stud is retained by a lock nut. The known device has several drawbacks. One disadvantage of the device is that its construction is relatively complex. Furthermore, the achievable clamping action of the device on the pipes is relatively weak due to the relatively poor transfer of force in the device. Specifically, the force transferred through the yoke plate via the stud to the upper connection element is commonly too small to achieve a solid clamping action of the device on the pipes, particularly if a considerable bending moment is applied to the pipes. For this reason, the known device is only appropriate for a very limited number of applications, and in particular in a vertical orientation. The device mentioned in the preamble is known from the international application WO 80/02587. This patent publication discloses an improved device with which an slightly improved clamping force with respect to the device disclosed in the German patent publication can be realized. The locking pin is adapted to cause both connection elements to affect a prestressed grip on one another, and therefore functions in particular as a prestressed bolt. Because the locking pin is adapted to exert a relatively high prestress force on the connection elements, the dynamic forces exerted on the box-profile elements can be absorbed, which results in a slightly improved clamping action. However, it has been found that the clamping force which can be realized with the known device is still relatively poor due to a relatively unfavorable distribution of forces, as a result of which the device can merely be applied in situations which require an inferior transfer of forces.

It is an object of the invention to provide an assembly of multiple- box-profile elements and a device of relatively simple construction for interconnection of said box-profile elements in a relatively solid manner.

The invention provides to that end an assembly according to the preamble, characterised in that at least a portion of an inner side of the first receptors and of an inner side of the second receptors is at least partially profiled, wherein the profiled part of the receptors is adapted for cooperation with a counter-profile making part of the box-profile elements. This type of profiling increases the strength of the clamping action on the box profile elements in the device. In addition, the construction of the assembly is relatively simple. Only three elements are required to achieve a relatively durable and solid clamping of the box-profile elements in the device. Preferably, the box-profile elements are, at least primarily, positioned in a single plane. The prestress exerted upon the box-profile elements is sufficiently large that the device can be oriented in any position. In another preferred embodiment, the box-profile elements, or at least some of them, are not in the same plane. In that case, the assembly can, for example, be executed in a dome-shaped arrangement. The assembly can additionally be applied in a wide range of circumstances and situations, in any desired orientation. One can imagine that an assembly according to the invention could be used for the construction of permanent or temporary houses or commercial buildings. The locking pin is preferably located at a central position relative to both connection elements in order to optimise the transfer of force to both connection elements. Moreover, the locking pin is positioned in the centre line of both connection elements, which means that the locking pin, in fact, extends through the centre of each connection element. It is, however, also conceivable that in certain situations multiple locking pins are applied in a single device for securing both connection elements. In this way, for example, a locking pin could pass through each corner of a connection element to arrange the transfer of forces within the joint in another way. Since the connection elements are generally designed with right angles, it can be advantageous to apply four locking pins for the mutual coupling of both the connection elements, with the locking pins positioned at, or at least close to, the corners of the connection elements.

In a preferred embodiment, the effective length of the locking pin is adjustable. In this manner, it is possible to regulate the prestressing forces exerted by the connection elements on the box-profile elements. It is also imaginable to increase the length of the locking pin such that the connection elements can be positioned at a, yet limited, distance from one another. It should be clear that, in this arrangement, the box-profile elements are no longer clamped by the device and can therefore be removed from the device with relatively little effort. This arrangement provides an assembly that is suitable for releasably coupling of multiple box-profile elements. Furthermore, by establishing a certain amount of play between the two coupling elements, a pre-assembly mode can be achieved, which allows the box-profile elements to be attached to the device in a relatively instable state. After this pre-assembly, the effective length of the locking pin can be shortened, as a result of which a relatively solid, stable and durable clamping of the box-profile elements in the device can be realised. The regulation of the effective length of the locking pin is, for example, achievable in combination with a lock nut. Preferably, the locking pin is provided with at least one eccentrically rotatable element engaging a connection element. Through rotation of the eccentrically rotatable element, the effective length of the locking pin can be regulated as well. An exceptional advantage of such a locking pin is that the prestress force is already determined in advance, ensuring a particular degree of certainty, and therefore safety during application of the locking pin. In a specific, preferred embodiment, the eccentric, rotatable element is provided with a handle. In this manner, rotation of the eccentrically rotatable element is facilitated for a user. The handle is preferably releasably coupled with the eccentrically rotatable element, allowing the handle to be removed after rotation of the eccentric, rotatable element (and after the associated application of prestress on the connection elements) in order to minimise the amount of space occupied by the device. This preferred embodiment of the assembly is particularly suitable for application in the construction of modular houses and (other types of) detachable structures.

In another preferred embodiment, the locking pin is provided with at least one cam designed to retain a connection element. The cam can be solidly attached to the locking pin and therefore does not serve to adjust the length of the locking pin. It is also possible that the cam is executed as a nut, which can be rotated coaxially around the locking pin. This allows regulation of the effective length of the locking pin. Generally, one end of the locking pin will be provided with a permanently attached cam, and an opposite end of the locking pin will be provided with an element for the regulation of the effective length of the locking pin.

In yet another preferred embodiment, the locking pin is releasably coupled with at least one of the connection elements. It is, therefore, possible to completely detach the first connection element from the second connection element, which can further facilitate the (pre-)attachment of the box-profile elements to the device. Furthermore, this design allows the separate connection elements to be replaced and/or maintained in a relatively simple manner. The locking pin can be removed from the connection element by translation or rotation of the locking pin in relation to the particular connection element, after which the locking pin can be removed through a slot in the connection element.

In a preferred embodiment, at least one connection element is provided with coupling means for attachment of the device to an external object. The type, dimensions and geometry of the coupling means are in particular dependant on the external object to which the assembly must be attached. The external objects can, of course, be widely diverse in nature, and may include, for example, a wall, a floor, a textile product, et cetera. In a specific, preferred embodiment, the attachment elements can be releasably connected to their associated connection elements. The releasably connection further increases the flexibility and potential applicability of a joint according to the invention.

The invention also relates to a device for interconnecting box-profile elements for use in the assembly mentioned above, wherein the box-profile elements are clamped into the receptors of the device.

The invention further relates to a method for the interconnection of box-profile elements by using such an assembly, comprising the steps: a) positioning parts of multiple box-profile elements in the first and corresponding second receptors, at least a portion of the first receptors and second receptors being profiled at least partially, wherein the profiled part of the receptors is adapted for cooperation with a counter-profile making part of the box-profile elements, and b) clamping the box-profile elements into the device by shortening the effective length of the locking pin to achieve a prestress between the first connection element and the second connection element. Step a) can be considered to be a (pre-)assembly step that occurs before the actual interconnection of the box-profile elements, which is effected by the clamping action according to step b). Shortening of the effective length of the locking pin can be achieved by the manners previously described. Disassembly of the box-profile elements can be achieved in a reciprocal fashion, with as first step an increase in the effective length of the locking pin, followed by the removal of the box-profile elements from the device.

The invention will be explained on the basis of the non-limiting embodiments shown in the following figures, wherein :
figure 1a shows a perspective view of a shoe used in a joint according to the invention,
figure 1b shows a perspective view of a clamp used in a joint according to the invention,
figure 2 shows a perspective view of a preferred embodiment in accordance with the invention,
figure 3a shows the cross-section of a joint, corresponding with figure 2, in the closed position,
figure 3b shows the cross-section of a joint, corresponding with figure 2, in the opened position,
figure 4 shows a perspective view of another preferred embodiment of a joint in accordance with the invention in an operational arrangement,
figure 5 shows a perspective view of a joint, corresponding with figure 4, which is ready for use, and
figure 6 shows a perspective view of another clamp used in a device in accordance with the invention.

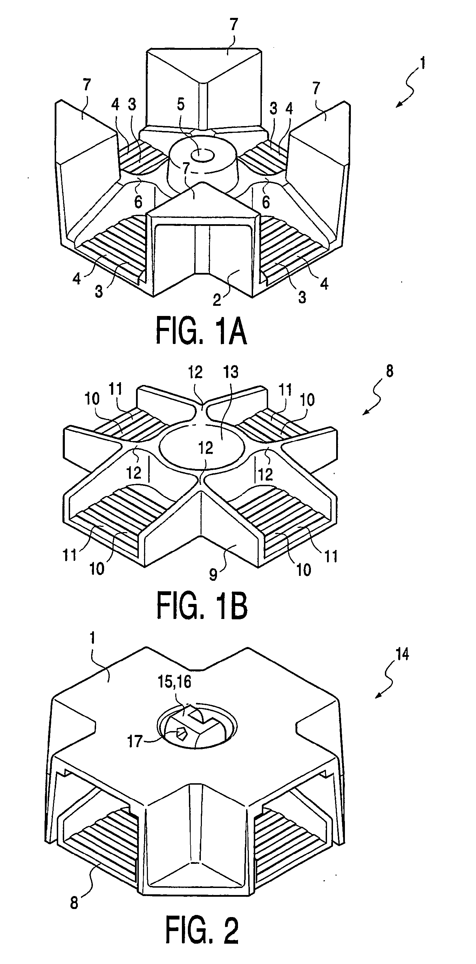

Figure 1a shows a perspective view of a shoe 1 used in a joint according to the invention. A compatible joint is also shown in figure 2. The shoe 1 is provided with a basic structure 2 with four receptors 3 for the ends of beam-shaped elements (not shown). Each of the receptors 3 is provided with a profiled surface 4. The profiled surface 4 can be integrated into the basic structure or can be formed as a separate layer of material, preferably made of an elastomer. The beam-shaped elements can be provided with a counter-profile adapted for cooperation with the profile 4 of the basic structure 2. Preferably, both the profile 4 and the counter-profile are designed in such a way that the surface-area contact between the profiles is maximised in order to optimise the clamping action of the basic structure 2 on the beam-shaped elements. Furthermore, the geometry of the profile elements can influence the clamping action of the basic structure 2. A relatively large tooth angle, as well as the application of relatively sharp, non-bevelled teeth will also contribute to an improved clamping action on the beam-shaped elements in the basic structure 2. The basic structure 2 is provided with a central passage 5 for a central locking pin (not shown). The receptors 3 are interconnected by means of (diagonal) reinforcement ribs 6 and four corner gussets 7. The shoe 1 can be constructed of various materials, such as metal and/or plastic, however the preference is for an essentially rigid construction.

Figure 1b shows a perspective view of a clamp 8 used in a joint according to the invention. The clamp 8 is adapted for cooperation with the shoe 1 shown in figure 1. The clamp 8 also comprises a basic structure 9 is provided with four receptors 10 for the ends of beam-shaped elements. To this end, the receptors 10 each include a profiled surface 11 and are interconnected with reinforcement ribs 12. The basic structure additionally is provided with a central passage 13 for a central locking pin (not shown).

Figure 2 shows a perspective view of a preferred embodiment of a joint 14 according to the invention. The joint 14 is provided with a shoe 1 as shown in figure 1a, a clamp 8 that works together with shoe 1 as shown in figure 1b, and a locking pin 15 that extends through the openings 5, 13 (not shown) in the shoe 1 and the clamp 8. Only the end of the locking pin 15 is shown in figure 2. The end is provided with an eccentric, rotatable head 16, with the rotation axis of the head 16 substantially oriented at a right angle to the locking pin 15. The head 16 is provided with a socket 17 for the socket head portion of a handle (not shown). In the configuration shown, the head 16 is oriented so that the head 16 exerts a prestress on the shoe 1 and that the opposite end of the locking pin 15 exerts an equal and opposite prestress on the clamp 8, resulting in sufficient pre-stress between the shoe 1 and the clamp 8 to effect a solid clamping of the elements positioned in the receptors 3, 10. It should be clear that the effectiveness of the clamping action is also dependent on the dimensions of the beam-shaped elements. Preferably, these elements and the receptors of the shoe 1 and the clamp 8 fit together well. This solid clamping can be reduced through the rotation of the head 16 of the locking pin 15, which increases the effective length of the locking pin 15, thereby (considerably) reducing the applied prestress.

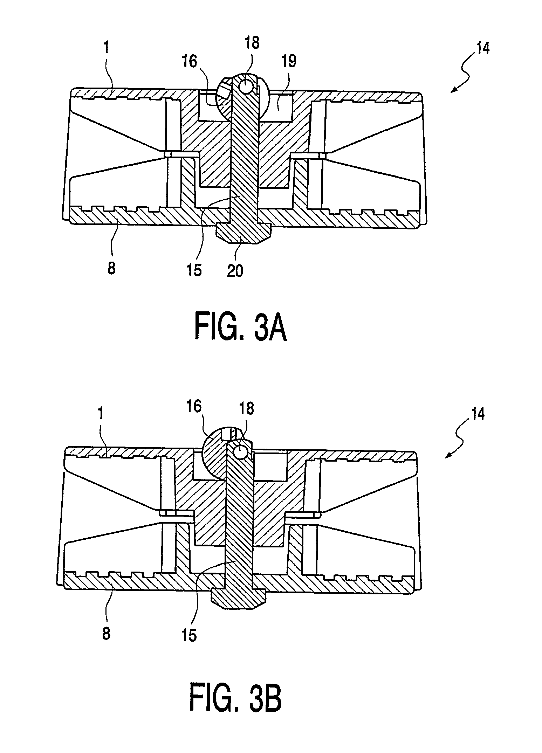

Figure 3a shows the cross-section of the joint 14 corresponding with figure 2 in the closed position. This closed position is also shown in figure 2. This clearly shows that the rotational axis 18 of the head 16 is eccentrically positioned in relation to the head 16. The head is, furthermore, positioned in a recess 19 in the shoe 1, which is intended to minimise the exposed portion of the joint 14. The locking pin 15 is provided with a cam 20, positioned on the end opposite the head 16, which retains the clamp 8. This cam 20 is solidly attached to the locking pin 15. The locking pin 15 functions primarily as a prestress bolt, designed to guarantee a reliable and relatively strong coupling of the beam-shaped elements.

Figure 3b shows the cross-section of the joint 14, corresponding with figure 2, in the opened position. In the opened position, the head 16 is rotated around the axis 18 in contrast to the position of the head 16 shown in figure 3a. Through the eccentric rotation, the (effective) length of the locking pin 15 is increased, reducing the prestress between the shoe 1 and the clamp 8. In the opened position shown, the centrally located portions of the shoe 1 and the clamp 8 are positioned at a distance from one another. In this position, it is possible to remove (clamped) beam-shaped elements from the joint 14 and/or insert beam-shaped elements into the receptors 3, 10 of the shoe 1 and the clamp 8. In this way, a secure pre-assembly of the beam-shaped elements can be achieved, augmented by the distance restriction between the shoe 1 and the clamp established by the locking pin 15. After positioning the ends of the beam-shaped elements in the various receptors 3, 10, the head 16 of the locking pin 15 can once again be rotated, reducing the effective length of the locking pin 15, which results in a relatively solid and stable interconnection of the beam-shaped elements.

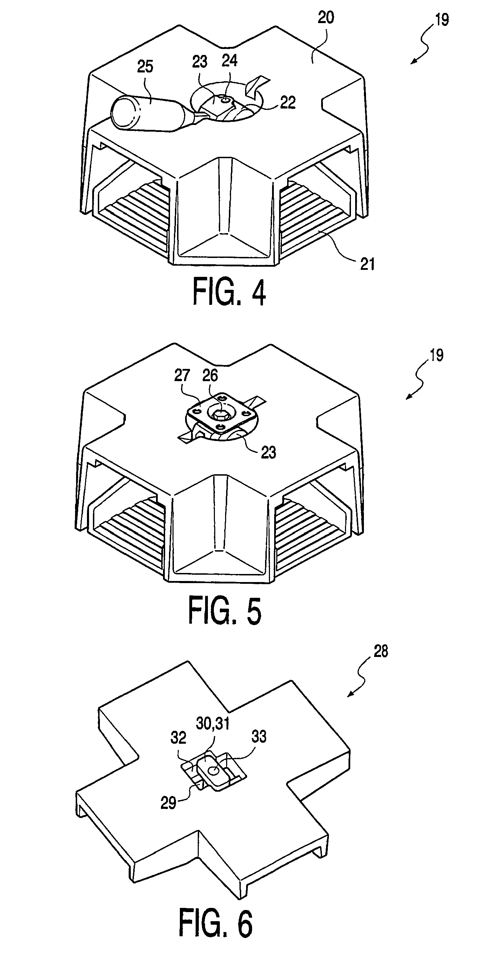

Figure 4 shows a perspective view of another preferred embodiment of a joint 19 according to the invention in an operational arrangement. The joint 19 is qua construction virtually identical to the joint 14 shown in figure 2. However, in the joint 19 shown in figure 4, the shoe 20 and the clamp 21 are connected together by a locking pin 22, which is provided with an eccentric, rotatable head 23 that has a socket for a retaining pin (not shown). The retaining cap 22 is also provided with a socket (not visible), close to the head 23, for accepting a portion of the locking pin. This provision allows the joint 19 to be locked in the shown (closed) position by the locking pin, preventing the unintentional opening of the joint 19. The head 23 is, furthermore, releasably connected with a handle 25 to facilitate the rotation of the head 23.

Figure 5 shows a perspective view of a joint 29 as shown in figure 4, that is ready for use. In the position shown, the handle 25 is detached from the head 23 and the locking pin 26 is positioned in the socket 24. This allows the clamped position of the beams (not shown) in the joint 19 to be consolidated and prevents, or at least inhibits, the (unintentional) change of position of the joint 19. The locking pin 26 is, additionally, connected to an attachment element 27 for connection of the joint 19 to an external object, such as, for example, a wall, a floor, an adjacent joint, a textile product, et cetera.

Figure 6 shows a perspective view of another clamp 28 used in an assembly according to the invention. The clamp 28 is virtually identical to the clamp 8 shown in figure 1b. The clamp 28 is provided with, however, a passage 29 for a prestress bolt 30, such that the passage 29 is of a shape through which the flange 31 that is part of the prestress bolt 30 can be inserted. In the position shown, the flange 31 rests on the recess 32 in the clamp 28 and can only be removed from the clamp 28 after the prestress bolt 30 (and the flange 31) has (have) been rotated at right angle. The flange 31 is provided with a socket 33 for an attachment element (not shown) designed to attach the device to an external object.

It should be clear that the invention is not limited to the embodiments shown and described here, but that innumerable variations are possible within the framework of the attached claims, which will be obvious to a person skilled in this field.

## Claims

1. Assembly of multiple box-profile elements and a device (14, 19, 29) for the interconnection of said box-profile elements, the device (14, 19, 29) comprising:
- an at least substantially rigid first connection element (1, 20) provided with multiple first receptors (3) for parts of said multiple box-profile elements,
- an at least substantially rigid second connection element (8, 21, 28) adapted for cooperation with the first connection element (1, 20), said second connection element (8, 21, 28) being provided with multiple second receptors (10), corresponding to the first receptors (3), for parts of said multiple box-profile elements, and
- securing means coupled with the first connection element (1, 20) and the second connection element (8, 21, 28) to secure the mutual connection of the first connection element (1, 20) and the second connection element (8, 21, 28), the securing means comprising at least one locking pin (15, 30) that is, at least partially enclosed by both connection elements, said locking pin (15, 30) being adapted for engagement on a side of the first connection element (1, 20) opposite to the second connection element (8, 21, 28) and on a side of the second connection element (8, 21, 28) opposite to the first connection element (1, 20),
the device (14, 19, 29) being adapted for clamping said multiple box-profile elements into the receptors (3, 10) of said device (14, 19, 29),
**characterised in**
**that** at least a portion of an inner side (4) of the first receptors (3) and of an inner side (11) of the second receptors (10) is at least partially profiled, wherein the profiled part (4, 11) of the receptors (3, 10) is adapted for cooperation with a counter-profile making part of the box-profile elements.

2. Assembly according to claim 1, **characterised in that** the effective length of the locking pin (15, 30) is adjustable.

3. Assembly according to claim 2, **characterised in that** the locking pin (15, 30) is provided with at least one eccentrically rotatable element.

4. Assembly according to claim 3, **characterised in that** the eccentrically rotatable element is provided with a handle.

5. Assembly according to claim 4, **characterised in that** the handle is releasably coupled with the eccentrically rotatable element.

6. Assembly according to one of the previous claims, **characterised in that** the locking pin (15, 30) is provided with at least one cam.

7. Assembly according to one of the previous claims, **characterised in that** the locking pin (15, 30) is releasably coupled to at least one connection element.

8. Assembly according to one of the previous claims, **characterised in that** at least one connection element is provided with coupling means for coupling of the device (14, 19, 29) to an external object.

9. Assembly according to claim 8, **characterised in that** the coupling means are releasably connected to the associated connection element.

10. Assembly according to one of the previous claims, **characterised in that** the box-profile elements are located at least substantially in a single plane.

11. Device (14, 19, 29) for the interconnection of box-profile elements for use in the assembly according to one of claims 1-10.

12. Method for the interconnection of box-profile elements by use of an assembly in accordance with claims 1 through 10, comprising the steps:
a) positioning of the ends of multiple box-profile elements in the first and corresponding second receptors (10), at least a portion (4, 11) of the first receptors (3) and second receptors (10) being profiled at least partially, wherein the profiled part (4, 11) of the receptors (3, 10) is adapted for cooperation with a counter-profile making part of the box-profile elements, and
b) clamping of the box-profile elements into the device (14, 19, 29) by shortening the effective length of the locking pin (15, 30) to achieve a prestress between the first connection element (1, 20) and the second connection element (8, 21, 28).

## Patentansprüche

1. Aufbau von Mehrfachkastenprofilelementen und eine Anordnung (14, 19, 29) zum Miteinanderverbinden von besagten Kastenprofilelementen, die Anordnung (14, 19, 29) umfasst:
- ein zumindest im Wesentlichen starres erstes Verbindungselement (1, 20), das mit ersten Mehrfachrezeptoren (3) für Teile von besagten Mehrfachkastenprofilelementen versehen ist,
- ein zumindest im Wesentlichen starres zweites Verbindungselement (8, 21, 28), das für die Zusammenarbeit mit dem ersten Verbindungselement (1, 20) ausgelegt ist, wobei besagtes zweites Verbindungselement (8, 21, 28) mit zweiten Mehrfachrezeptoren (10), die den ersten Rezeptoren (3) entsprechen, versehen ist, für Teile der besagten Mehrfachkastenprofilelemente und
- Sicherungsmittel, die mit dem ersten Verbindungselement (1, 20) und dem zweiten Verbindungselement (8, 21, 28) zum Sichern der gegenseitigen Verbindung zwischen dem ersten Verbindungselement (1, 20) und dem zweiten Verbindungselement (8, 21, 28) gekoppelt sind, wobei die Sicherungsmittel mindestens einen Arretierungsstift (15, 30) umfassen, der zumindest teilweise durch beide Verbindungselemente umschlossen wird, besagter Arretierungsstift (15, 30) ist ausgelegt für den Eingriff auf einer Seite des ersten Verbindungselements (1, 20) gegenüber dem zweiten Verbindungselement (8, 21, 28) und an einer Seite des zweiten Verbindungselements (8, 21, 28) gegenüber dem ersten Verbindungselement (1, 20).
Die Anordnung (14, 19, 29) ist ausgelegt, um die besagten Kastenprofilelemente in den Rezeptoren (3, 10) der besagten Anordnung (14, 19, 29) festzuklemmen,
**dadurch gekennzeichnet, dass** zumindest ein Abschnitt einer Innenseite (4) der ersten Rezeptoren (3) und von einer Innenseite (11) der zweiten Rezeptoren (10) zumindest teilweise mit einem Profil versehen ist, worin der Profilbereich (4, 11) der Rezeptoren (3, 10) für die Zusammenarbeit mit einem Gegenprofil ausgelegt ist, das Teil der Kastenprofilelemente ist.

2. Aufbau nach Anspruch 1, **dadurch gekennzeichnet, dass** die wirksame Länge des Arretierungsstifts (15, 30) verstellbar ist.

3. Aufbau nach Anspruch 2, **dadurch gekennzeichnet, dass** der Arretierungsstift (15, 30) mit mindestens einem exzentrisch schwenkbaren Element versehen ist.

4. Aufbau nach Anspruch 3, **dadurch gekennzeichnet, dass** das exzentrisch schwenkbare Element mit einer Griffstange versehen ist.

5. Aufbau nach Anspruch 4, **dadurch gekennzeichnet, dass** die Griffstange an das exzentrisch schwenkbare Element lösbar gekoppelt ist.

6. Aufbau nach einem der vorhergehenden Ansprüche, **dadurch gekennzeichnet, dass** der Arretierungsstift (15, 30) mit mindestens einem Exzenter versehen ist.

7. Aufbau nach einem der vorhergehenden Ansprüche, **dadurch gekennzeichnet, dass** der Arretierungsstift (15, 30) mit mindestens einem Verbindungselement lösbar gekoppelt ist.

8. Aufbau nach einem der vorhergehenden Ansprüche, **dadurch gekennzeichnet, dass** mindestens ein Verbindungselement mit Kopplungsmitteln zum Koppeln der Anordnung (14, 19, 29) an einem externen Gegenstand versehen ist.

9. Aufbau nach Anspruch 8, **dadurch gekennzeichnet, dass** die Kopplungsmittel mit dem zugehörigen Verbindungselement lösbar verbunden sind.

10. Aufbau nach einem der vorhergehenden Ansprüche, **dadurch gekennzeichnet, dass** sich die Kastenprofilelemente zumindest im Wesentlichen in einer einzigen Ebene befinden.

11. Anordnung (14, 19, 29) zum Miteinanderverbinden von Kastenprofilelementen für die Anwendung im Aufbau nach einem der Ansprüche 1-10.

12. Verfahren zum Miteinanderverbinden von Kastenprofilelementen für die Anwendung in einem Aufbau in Übereinstimmung mit Anspruch 1 bis 10, das die folgenden Schritte umfasst:
a) Positionieren der Enden von Mehrfachkastenprofilelementen in den ersten und entsprechenden zweiten Rezeptoren (10), wovon zumindest ein Teilbereich der ersten Rezeptoren (3) und der zweiten Rezeptoren (10) zumindest teilweise mit einem Profil versehen ist, worin der Profilbereich (4, 11) der Rezeptoren (3, 10) für die Zusammenarbeit mit einem Gegenprofil ausgelegt ist, das Teil der Kastenprofilelemente ist und
b) Festklemmen der Kastenprofilelemente in der Anordnung (14, 19, 29) durch Verkürzen der wirksamen Länge des Arretierungsstifts (15, 30), um eine Vorspannung zwischen dem ersten Verbindungselement (1, 20) und dem zweiten Verbindungselement (8, 21, 28) zu erreichen.

## Revendications

1. Assemblage de plusieurs éléments à profil parallélépipédique et d'un dispositif (14, 19, 29) pour interconnecter lesdits éléments à profil parallélépipédique, le dispositif (14, 19, 29) comprenant :
- un premier élément de connexion (1, 20) au moins sensiblement rigide pourvu de plusieurs premiers organes de réception (3) pour des pièces desdits plusieurs éléments à profil parallélépipédique ;
- un second élément de connexion (8, 21, 28) au moins sensiblement rigide adapté pour coopérer avec le premier élément de connexion (1, 20), le second élément de connexion (8, 21, 28) étant pourvu de plusieurs seconds organes de réception (10), correspondant aux premiers organes de réception (3), pour des pièces desdits plusieurs éléments à profil parallélépipédique, et
- des moyens de verrouillage couplés au premier élément de connexion (1, 20) et au second élément de connexion (8, 21, 28) pour verrouiller la connexion mutuelle du premier élément de connexion (1, 20) et du second élément de connexion (8, 21, 28), les moyens de verrouillage étant constitués d'au moins une goupille d'arrêt (15, 30) qui est, au moins partiellement, enserrée par les deux éléments de connexion, ladite goupille d'arrêt (15, 30) étant adaptée pour prendre appui sur un côté du premier élément de connexion (1, 20) opposé au second élément de connexion (8, 21, 28) et sur un côté du second élément de connexion (8, 21, 28) opposé au premier élément de connexion (1, 20),
le dispositif (14, 19, 29) étant adapté pour serrer lesdits plusieurs éléments à profil parallélépipédique dans les organes de réception (3, 10) dudit dispositif (14, 19, 29), **caractérisé en ce que**
au moins une partie d'un côté intérieur (4) des premiers organes de réception (3) et d'un côté intérieur (11) des seconds organes de réception (10) est au moins partiellement profilée, étant entendu que la partie profilée (4, 11) des organes de réception (3, 10) est adaptée pour coopérer avec un contre-profil faisant partie des éléments à profil parallélépipédique.

2. Assemblage selon la revendication 1, **caractérisé en ce que** la longueur effective de la goupille d'arrêt (15, 30) est adaptable.

3. Assemblage selon la revendication 2, **caractérisé en ce que** la goupille d'arrêt (15, 30) est pourvue d'au moins un élément rotatif excentriquement.

4. Assemblage selon la revendication 3, **caractérisé en ce que** l'élément rotatif excentriquement est pourvu d'une poignée.

5. Assemblage selon la revendication 4, **caractérisé en ce que** la poignée est couplée amovible à l'élément rotatif excentriquement.

6. Assemblage selon l'une quelconque des revendications précédentes, **caractérisé en ce que** la goupille d'arrêt (15, 30) est pourvue d'au moins une came.

7. Assemblage selon l'une quelconque des revendications précédentes, **caractérisé en ce que** la goupille d'arrêt (15, 30) est couplée amovible à au moins un élément de connexion.

8. Assemblage selon l'une quelconque des revendications précédentes, **caractérisé en ce qu'**au moins un élément de connexion est pourvu de moyens de couplage pour coupler le dispositif (14, 19, 29) à un objet externe.

9. Assemblage selon la revendication 8, **caractérisé en ce que** les moyens de couplage sont attachés amovibles à l'élément de connexion associé.

10. Assemblage selon l'une quelconque des revendications précédentes, **caractérisé en ce que** les éléments à profil parallélépipédique sont situés au moins sensiblement dans un seul plan.

11. Dispositif (14, 19, 29) pour interconnecter des éléments à profil parallélépipédique à utiliser dans l'assemblage selon l'une des revendications 1-10.

12. Procédé pour interconnecter des éléments à profil parallélépipédique par utilisation d'un assemblage selon les revendications 1 à 10, comprenant les étapes consistant :
a) à positionner les extrémités de plusieurs éléments à profil parallélépipédique dans les premiers organes de réception et dans les seconds organes de réception correspondants (10), au moins une partie (4, 11) des premiers organes de réception (3) et des seconds organes de réception (10) étant profilés au moins partiellement, étant entendu que la partie profilée (4, 11) des organes de réception (3, 10) est adaptée pour coopérer avec un contre-profil faisant partie des éléments à profil parallélépipédique, et
b) à serrer les éléments à profil parallélépipédique dans le dispositif (14, 19, 29) en raccourcissant la longueur effective de la goupille d'arrêt (15, 30) pour obtenir une précontrainte entre le premier élément de connexion (1, 20) et le second élément de connexion (8, 21, 28).
